(19) **Europäisches Patentamt / European Patent Office / Office européen des brevets**

(11) **EP 3 339 001 B1**

(12) **EUROPEAN PATENT SPECIFICATION**

(45) Date of publication and mention
of the grant of the patent:
**12.07.2023 Bulletin 2023/28**

(21) Application number: **17200194.3**

(22) Date of filing: **06.11.2017**

(51) International Patent Classification (IPC):
**B29C 64/112** *(2017.01)*   **B29C 64/165** *(2017.01)*
**B29C 64/364** *(2017.01)*   **B33Y 10/00** *(2015.01)*
**B33Y 30/00** *(2015.01)*   **B33Y 70/10** *(2020.01)*
**A61L 27/52** *(2006.01)*

(52) Cooperative Patent Classification (CPC):
**B29C 64/364; B29C 64/112; B29C 64/165;
B33Y 10/00; B33Y 30/00; B33Y 70/10**

(54) **METHOD OF MANUFACTURING SOLID FREEFORM FABRICATION OBJECT AND SYSTEM FOR MANUFACTURING SOLID FREEFORM FABRICATION OBJECT**

VERFAHREN ZUR HERSTELLUNG EINES FESTEN FREIFORMFERTIGUNGSOBJEKTS UND VORRICHTUNG ZUR HERSTELLUNG EINES FESTEN FREIFORMFERTIGUNGSOBJEKTS

PROCÉDÉ DE FABRICATION D'UN OBJET DE FABRICATION DE FORME LIBRE SOLIDE ET DISPOSITIF DE FABRICATION D'UN OBJET DE FABRICATION DE FORME LIBRE SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2016 JP 2016218342**

(43) Date of publication of application:
**27.06.2018 Bulletin 2018/26**

(73) Proprietor: **Ricoh Company, Ltd.
Tokyo 143-8555 (JP)**

(72) Inventors:
• **MATSUMURA, Takashi**
**Ohta-ku, Tokyo 143-8555 (JP)**
• **NORIKANE, Yoshihiro**
**Ohta-ku, Tokyo 143-8555 (JP)**
• **NIIMI, Tatsuya**
**Ohta-ku, Tokyo 143-8555 (JP)**
• **IWATA, Hiroshi**
**Ohta-ku, Tokyo 143-8555 (JP)**
• **OKADA, Noriaki**
**Ohta-ku, Tokyo 143-8555 (JP)**

(74) Representative: **Marks & Clerk LLP
15 Fetter Lane
London EC4A 1BW (GB)**

(56) References cited:
**WO-A1-2015/111366     WO-A1-2016/019078
US-A1- 2016 115 297     US-A1- 2016 275 818**

• **L. FANG ET AL: "Impact of indoor air temperature
and humidity in an office on perceived air quality,
SBS symptoms and performance", INDOOR AIR,
vol. 14, no. s7, 1 August 2004 (2004-08-01), pages
74-81, XP055462963, DK ISSN: 0905-6947, DOI:
10.1111/j.1600-0668.2004.00276.x**

**Description**

BACKGROUND

Technical Field

The present invention relates to a method of manufacturing a solid freeform fabrication object in accordance with claim 1 and a device for manufacturing a solid freeform fabrication object in accordance with claim 7.

Description of the Related Art

An inkjet stereolithography method is known in which images of a photocurable liquid resin are formed at positions required to manufacture a fabrication object and this image forming process is repeated to manufacture a multi-layered three-dimensional object utilizing an inkjet method.

Moreover, highly strong gels such as nano composite gels, double network gels, and slide link gels for use in the inkjet stereolithography method have been developed. This contributes to development of soft gels which are extremely strong and flexible in comparison with typical gels.

The soft gel is flexible because of its high solvent containing ratio and expected to be applied in various fields including the medical field.

In particular, hydrogels containing water as main solvent are important elements for biological body and widely used in medicine, medical, food, agriculture, and industry. Of these, in the medical field, for example, when applying hydrogels in prior simulation in biological body surgery or using it as a substitute of cartilage, corpus vitreum of ocular bulb, etc. of biological body, solid freeform fabrication objects which have complex and fine structures and are formed of hydrogels capable of freely controlling hardness in the objects have been demanded.

To meet this demand, a method has been proposed as an additive manufacturing method, which includes irradiating a photocurable liquid resin with laser beams, in particular, ultraviolet rays, layer by layer to manufacture a three dimensional solid freeform fabrication object.

WO 2015/111366 A1 discloses a three-dimensional object and method for forming the same. WO 2016/019078 A1 discloses three-dimensional printing of bio-ink compositions.

SUMMARY

According to an embodiment of the present disclosure, provided is an improved method of manufacturing a solid freeform fabrication object, which includes curing a liquid film made of an active energy ray curable liquid composition to form a layer; and laminating the layer to obtain the solid freeform fabrication object, wherein an absolute humidity in an environment where the solid freeform fabrication object is manufactured is controlled to be from 5.5 to 20 $g/m^3$.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawing, which is a schematic diagram illustrating an example of the device for manufacturing a solid freeform fabrication object (three-dimensional object) according to an embodiment of the present invention.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning, unless otherwise specified.

Method of Manufacturing Solid Freeform Fabrication Object and Device for Manufacturing Solid Freeform Fabrication Object

The method of manufacturing a solid freeform fabrication object of the present disclosure includes curing a liquid film made of an active energy ray curable liquid composition to form a layer and laminating the layer to obtain the solid freeform fabrication object, wherein the solid freeform fabrication object is manufactured at an absolute humidity of from 5.5 to 20 g/m$^3$.

The device for manufacturing a solid freeform fabrication object of the present disclosure includes an accommodating unit to accommodate an active energy ray curable liquid composition, a liquid film forming device to form a liquid film formed of the active energy ray curable liquid composition, an active energy ray irradiator to cure the liquid film; and a device to control the absolute humidity in an environment where the solid freeform fabrication object is manufactured, wherein the liquid film cured by the active energy ray irradiator is laminated to form the solid freeform fabrication object.

The method of manufacturing a solid freeform fabrication object and the device for manufacturing a solid freeform fabrication object of the present disclosure are made based on the knowledge that in typical methods and devices, a large amount of photocurable liquid resins are required to be stored, which inevitably increases the size of the device so that temperature and humidity control is required to stabilize the quality of the photocurable liquid resin.

In addition, the method of manufacturing a solid freeform fabrication object and the device for manufacturing a solid freeform fabrication object of the present disclosure are made based on the knowledge that in typical methods and devices, since a large amount of water is contained in a fabrication material to impart flexibility to an obtained solid freeform fabrication object, the form and the strength of the obtained solid freeform fabrication object are easily affected by the temperature of the manufacturing environment, which makes it difficult to fabricate an object with high precision.

The absolute humidity in the environment in which the solid freeform fabrication object is manufactured is 5.5 to 20 g/m$^3$, preferably from 6.5 to 18.5 g/m$^3$, more preferably from 9.0 to 18.5 g/m$^3$, and particularly preferably from 9.0 to 15.0 g/m$^3$. When the absolute humidity of the manufacturing environment of the solid freeform fabrication object is 5.5 g/m$^3$ or greater, it is possible to prevent evaporation of moisture in the active energy ray curable liquid composition ascribable to an environment temperature rise and environment humidity decrease caused by exhaust heat of a curing device produced during fabrication and exhaust heat produced during drive of the device. When the absolute humidity of the manufacturing environment of the solid freeform fabrication object is 20 g/m$^3$ or less, it is possible to prevent swelling of a solid freeform fabrication object caused by excessive absorption of moisture in the environment, thereby ameliorating the fabrication accuracy of the solid freeform fabrication object.

The absolute humidity of the manufacturing environment of the solid freeform fabrication object can be measured using an absolute humidity sensor (TAA80C, manufactured by Toplas Engineering Co., Ltd.), etc.

The system for manufacturing the solid freeform fabrication object includes a unit to control the absolute humidity of the manufacturing environment of the solid freeform fabrication object and the entire of the device is preferably housed or covered with a chamber to keep the manufacturing environment in the system constant. Moreover, it is preferable to install a humidifier or a temperature and humidity controlling device, if necessary. In addition to the humidifying method, the temperature and humidity controlling device is preferable because it can keep the temperature and the absolute humidity in the device constant and improve the manufacturing accuracy of a solid freeform fabrication object.

The humidifier has no specific limit and can be suitably selected to suit to a particular application. For example, humidifiers employing steam method, ultrasonic wave method, hybrid method, or aerification method can be used.

The temperature and humidity controlling device has no specific limit and can be suitably selected to suit to a particular application.

The method of manufacturing a solid freeform fabrication preferably satisfies at least one of the following (1) and (2).

(1): the active energy ray curable liquid composition includes water or a water-soluble organic solvent.
(2): the cured matter obtained by curing the active energy ray curable liquid composition is hygroscopic.

"Hygroscopic" means a property of a material absorbing moisture therearound.

In the method of manufacturing a solid freeform fabrication object, a layer formed by curing an active energy ray curable liquid composition is laminated to obtain a solid freeform fabrication object. It is preferable to manufacture an object utilizing an additive manufacturing method (in which a solid object is fabricated by lamination by repeating a layer forming step and a layer curing step) such as a known material jetting method. The number of repetition can be suitably selected to suit to the size, the form, and the structure of a solid freeform fabrication object to be manufactured. For example, if the average thickness per layer is in the range of from 10 to 50 μm, it is possible to conduct fabrication with good precision without peeling-off.

The solid freeform fabrication object is a hydrogel containing water and a polymerizable monomer and may furthermore optionally contain other components.

It is preferable that the hydrogel contain a mineral and the water be enclosed in a three-dimensional network structure formed of a complex of a polymer formed by polymerization of the polymerizable monomer and the mineral.

The water preferably accounts for 10 percent by mass or greater, more preferably from 10 to 99 percent by mass, furthermore preferably from 50 to 98 percent by mass, and particularly preferably from 60 to 97 percent by mass of the total content of the hydrogel.

An example of the method of manufacturing a solid freeform fabrication object according to the material jetting method is described below in detail.

Layer Forming Step and Layer Forming Device

The layer forming step includes discharging a liquid film made of an active energy ray curable liquid composition containing water and a polymerizable monomer to form a layer formed of the liquid film.

The layer forming device discharges the liquid film made of the active energy ray curable liquid composition containing water and the polymerizable monomer to form a layer formed of the liquid film.

The device to apply the active energy ray curable liquid composition is not particularly limited and can be suitably selected to suit to a particular application as long as it employs a method of applying liquid droplets to a target site with a suitable precision. For example, a dispenser method, a spray method, an inkjet method, etc. are suitable. Known devices are suitably used to execute these methods.

Of these, the inkjet method is preferable in terms that the quantitativeness of liquid droplets is good, the application area can be set to be large, and a complex form can be precisely and efficiently formed.

In the case of the inkjet method, the device includes a nozzle capable of discharging the active energy ray curable liquid composition. As the nozzle, nozzles in a known inkjet printer can be suitably used. For example, it is possible to use MH5420/5440 (manufactured by Ricoh Industry Company, Ltd.) as the inkjet printer. It is preferable to use the inkjet printer because the head portion can discharge a large amount of ink at once and the application area is large, which leads to improvement of high application performance.

Active Energy Ray Curable Liquid Composition

The active energy ray curable liquid composition preferably contains a polymerizable monomer, a mineral, water, and a water-soluble organic solvent and may furthermore optionally contain other components.

Polymerizable Monomer

The polymerizable monomer includes, for example, a mono-functional polymerizable monomer and a poly-functional polymerizable monomer. These can be used alone or in combination.

Mono-functional Polymerizable Monomer

The mono-functional monomer is a compound having a (meth)acrylyl group or a vinyl group in a molecule. Examples are acrylamides, N-substituted acrylamide derivatives, N,N-di-substituted acrylamide derivatives, N-substituted methacrylamide derivatives, N,N-disubstituted methacrylamide derivatives, and other mono-functional polymerizable monomers. These can be used alone or in combination.

Specific examples of the mono-functional polymerizable monomer include, but are not limited to, acrylamide, N,N-dimethylacrylamide, and N-isopropylacrylamide.

Specific examples of the other mono-functional polymerizable monomer include, but are not limited to, 2-etylhexyl(meth)acrylate, 2-hydroxyethyl(meth)acrylate, 2-hydroxypropyl(meth)acrylate, acryloyl morpholine (ACMO), caprolactone-modified tetrahydrofurfuryl(meta)acrylate, isobonyl(meth)acrylate, 3-methoxybutyl(meth)acrylate, tetrahydro furfuryl(meth)acrylate, lauryl(meth)acrylate, 2-phenoxyethyl (meth)acrylate, isodecyl(meth)acrylate, isooctyl(meth)acrylate, tridecyl(meth)acrylate, caprolactone(meth)acrylate, ethoxyfied nonylphenol(meth)acrylate, and urethane(meth)acrylate. These can be used alone or in combination.

When the mono-functional polymerizable monomer is polymerized, water soluble polymers having an amide group, an amino group, a hydroxyl group, a tetramethyl ammonium group, a silanol group, an epoxy group, etc. are obtained.

Water soluble polymers having an amide group, an amino group, a hydroxyl group, a tetramethyl ammonium group, a silanol group, an epoxy group, etc. are advantageous components to maintain the strength of a solid freeform fabrication object.

There is no specific limitation to the proportion of the mono-functional polymer and it can be suitably selected to suit to a particular application. Preferably, it is from 0.1 to 20 percent by mass to the total content of the active energy ray curable liquid composition. When the proportion is from 0.1 to 20 percent by mass, modulus of elasticity and hardness of an obtained solid freeform fabrication object can be controlled within suitable ranges.

Polyfunctional Polymerizable Monomer

The polyfuncitonal polymerizable monomer includes a bi-functional polymerizable monomer and a tri- or higher functional polymerizable monomer. These can be used alone or in combination.

Specific examples of the bi-functional monomer include, but are not limited to, tripropylene glycol di(meth)acrylate, triethylene glycol di(meth)acrylate, tetraethylene glycol di(meth)acrylate, polypropylene glycol di(meth)acrylate, neopentyl glycol hydroxy pivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonane diol(meth)acrylate, diethylene glycol di(meth)acrylate, neopentyl glycol di(meth)acrylate, tripropylene glycol di(meth)acrylate, caprolactone-modified hydroxy pivalic acid neopentyl glycol ester di(meth)acrylate, propoxinated neopentyl glycol di(meth)acrylate, ethoxy-modified bisphenol A di(meth)acrylate, polyethylene glycol 200 di(meth)acrylate, and polyethylene glycol 400 di(meth)acrylate. These can be used alone or in combination.

Specific examples of the tri- or higher functional polymerizable monomers include, but are not limited to, trimethylol propane tri(meth)acrylate, pentaerythritol tri(meth)acrylate, dipentaerythritol hexa(meth)acrylate, tirallyl isocyanate, (meth)acrylate of ε-caprolactone modified dipentaerythritol, tris(2-hydroxyethyl)isocyanulate tri(meth)acrylate, ethoxified trimethylol propane tri(meth)acrylate, propoxified trimethylol propane tri(meth)acrylate, propoxified glyceryl tri(meth)acrylate, pentaerythritol tetra(meth)acrylate, ditreimethylhol propanetetra(meth)acrylate, dipentaerythritol hydroxypenta(meth)acrylate, ethoxified(pentaerythritol tetra(meth)acrylate, and penta(meth)acrylate ester. These can be used alone or in combination.

The content of the poly-functional monomer is preferably from 0.001 to 1 percent by mass and more preferably from 0.01 to 0.5 percent by mass to the total content of the active energy ray curable liquid composition. When the proportion is from 0.001 to 1 percent by mass, modulus of elasticity and hardness of an obtained solid freeform fabrication object can be controlled within suitable ranges.

The proportion of the polymerizable monomer is from 0.5 to 20 percent by mass to the total content of the active energy ray curable liquid composition. When the proportion is from 0.5 to 20 percent by mass, modulus of elasticity and hardness of an obtained solid freeform fabrication object can be controlled within suitable ranges.

Mineral

There is no specific limitation to the mineral and it can be suitably selected to suit to a particular application. For example, lamellar clay minerals uniformly dispersible in water at the level of primary crystal are preferable and water swellable lamellar clay minerals are more preferable.

In the water swellable lamellar clay mineral, two-dimensional crystals having unit lattices in crystals are piled. When the water swellable lamellar clay mineral is dispersed in water, every single layer is separated to form a disk-like form crystal.

Such water swellable lamellar clay minerals have no particular limit and can be suitably selected to suit to a particular application. Examples of such water swellable clay minerals are water swellable smectite and water swellable mica. These can be used alone or in combination.

Specific examples of the water swellable smectite include, but are not limited to, water swellable hectorite containing sodium as an interlayer ion, water swellable montmorillonite, and water swellable saponite.

An example of such water swellable mica is water swellable synthesized mica.

Any marketed product of minerals can be used and synthesized minerals can be also suitably used.

Specific examples of the product available on the market include, but are not limited to, synthesized hectorite (laponite XLG, manufactured by RockWood), SWN (manufactured by Coop Chemical Ltd.), and fluorinated hectorite SWF (manufactured Coop Chemical Ltd.).

There is no specific limitation to the proportion of the mineral and it can be suitably selected to suit to a particular application. It is preferably from 1 to 40 part by mass to the total content of the active energy ray curable liquid composition. When the proportion is from 1 to 40 percent by mass, modulus of elasticity and hardness of an obtained solid freeform fabrication object can be controlled within suitable ranges.

Water

As the water, pure water rand and hyperpure water such as deionized water, ultrafiltered water, reverse osmosis water, and distilled water can be used.

It is suitable to dissolve or disperse other components such as organic solvents in the water to impart moisturizing property, antibiotic property, or electroconductive property and adjust hardness.

The proportion of the water is preferably 10 percent by mass or more, more preferably from 10 to 99 percent by mass, and furthermore preferably from 50 to 98 percent by mass, and particularly preferably from 60 to 97 percent by mass to the total content of the active energy ray curable liquid composition.

Water-soluble Organic Solvent

The active energy ray curable composition may include a water-soluble organic solvent, but if possible, it is preferred that the composition be free of it. If it is a component containing no water-soluble organic solvent, in particular volatile water-soluble organic solvent, viz., VOC (volatile organic compound) free compound, safeness at the place where the active energy ray curable liquid composition is handled is improved, which makes it possible to prevent pollution of the environment. The water-soluble organic solvent represents a conventional non-reactive water-soluble organic solvent, for example, ether, ketone, xylene, ethylacetate, cyclohexanone, and toluene, which is to be clearly distinguished from reactive monomers. Furthermore, "free of" or "no" water-soluble organic solvent means that no organic solvent is substantially included. The proportion thereof is preferably less than 0.1 percent by mass.

Other Components

The other optional components have no particular limit and can be suitably selected to suit to a particular application. For example, stabilizers, surface treatment chemicals, polymerization initiators, surfactants, colorants, viscosity modifiers, adhesion imparting agents, antioxidants, anti-aging agents, cross-linking promoters, ultraviolet absorbents, plasticizers, preservatives, and dispersants.

Stabilizer

The stabilizer stabilizes the water swellable lamellar clay mineral in dispersion state, keeps the sol state, and is used in order to impart stabilization as liquid in the case of inkjet method.

There is no specific limit to the stabilizer and can be suitably selected to suit to a particular application. For example, highly-concentrated phosphates, glucose, and nonionic surfactants can be used. These can be used alone or in combination.

Surface Treatment Chemical

The surface treatment chemical has no particular limit and can be suitably selected to suit to a particular application. Examples are polyester resins, polyvinyl acetate resins, silicone resins, coumarone resins, aliphatic acid esters, glycerides, and wax. These can be used alone or in combination.

Polymerization Initiator

There is no specific limitation to the polymerization initiator and it can be suitably selected to suit to a particular application. Example are polymerization initiators and thermal polymerization initiators.

As the photopolymerization initiator, any material can be used which produces a radical upon irradiation of light (ultraviolet rays in a wavelength range of 220 to 400 nm).

Specific examples of the photopolymerization initiator include, but are not limited to, acetophenone, 2,2-diethoxyacetophenone, p-dimethylaminoacetone, benzophenone, 2-chlorobenzophenone, p,p'-dichlorobenzophenone, p,p-bisdiethylamonobenzophenoen, Michler's Ketone, benzyl, benzoin, benzoin methylether, benzoin ethylether, benzoin isopropylether, benzoin-n-propylether, benzoin isobutylether, benzoin-n-butylether, benzylmethyl ketal, thioxanthone, 2-chlorothioxanthone, 2-hydroxy-2-methyl-1-phenyl-1-one, 1-(4-isopropylphenyl)-2-hydroxy-2-methylpropane-1-one, methylbenzoyl formate, 1-hydroxy cyclohexyl phenylketone, azobisisobutylo nitrile, benzoylperoxide, and di-tert-butylperoxide. These can be used alone or in combination.

The thermal polymerization initiator has no particular limitation and can be suitably selected to suit to a particular application. Examples thereof are azo-based initiators, peroxide initiators, persulfate initiators, and redox (oxidation-reduction) initiators. These can be used alone or in combination. Of these, peroxide initiators are preferable.

Specific example of the azo-based initiator include, but are not limited to, VA-044, VA-46B, VA-50, VA-057, VA-061, VA-067, VA-086, 2,2'-azobis(4-methoxy-2,4-dimethylvaleronitrile)(VAZO 33), 2,2'-azobis(2-amidinopropane)dihydrochloride (VAZO 50), 2,2'-azobis(2,4-dimethylvaleronitrile) (VAZO 52), 2,2'-azobis(isobutylonitrile) (VAZO 64), 2,2'-azobis-2-methylbutylonitrile) (VAZO 67), and 1,1-azobis(1-cyclohexane carbonitrile) (VAZO 88) (all available from Dupont Chemical), 2,2'-azobis(2-cyclopropylpropionitrile), and 2,2'-azo-bis(methylisobutylate) (V-601) (all available from Wako Pure Chemical Industries, Ltd.). These can be used alone or in combination.

The peroxide initiator has no particular limit and it can be suitably selected to suit to a particular application.

Specific examples include, but are not limited to, benzoyl peroxide, acetyl peroxide, lauroyl peroxide, decanoyl peroxide, dicetyl peroxy dicarbonate, di(4-t-butylcyclohexyl)peroxy dicarbonate (Perkadox 16S) (available from Akzo Nobel), di(2-ethylhexyl)peroxy dicarbonate, t-butyl peroxypivalate (Lupersol 11) (all available from Elf Atochem), t-butylperoxy-2-ethyl hexanoate (Trigonox 21-C50) (available from Akzo Nobel), and dicumyl peroxide. These can be used alone or in combination.

There is no specific limitation to the persulfate initiator and it can be suitably selected to suit to a particular application. Specific examples include, but are not limited to, potassium persulfate, sodium persulfate, and ammonium persulfate. These can be used alone or in combination.

Specific examples of redox (oxidation-reduction) initiator include, but are not limited to, a combination of the persulfate initiator and a reducing agent such as sodium metasulfite and sodium sulfite, a system based on the organic peroxide and tertiary amine (such as a system based on benzoyl peroxide and dimethylaniline), and a system based on organic hydroperoxide and transition metal (such as a system based on cumenhydroperoxide and cobalt naftate). These can be used alone or in combination.

Surfactant

There is no specific limitation to the surfactant and it can be suitably selected to suit to a particular application. A specific example is dodecyl sodium sulfate.

Viscosity

Viscosity of the active energy ray curable composition has no particular limit because it can be adjusted depending on the purpose and application devices. For example, if a discharging device that discharges the composition from nozzles is used, viscosity thereof is preferably in the range of from 2 to 30 mPa•s and more preferably from 5 to 15 mPa•s in the temperature range of from 20 to 65 degrees C, preferably at 25 degrees C. In addition, it is particularly preferable to satisfy this viscosity range without including the organic solvent mentioned above. The viscosity can be measured by a cone-and-plate type rotary viscometer (VISCOMETER TVE-22L, manufactured by TOKI SANGYO CO., LTD.) using a cone rotor (1°34' $\times$ R24) at a number of rotation of 50 rpm with a setting of the temperature of hemathermal circulating water in the range of from 20 to 65 degrees C. VISCOMATE VM-150III can be used for the temperature adjustment of the circulating water.

Curing Step and Active Energy Ray Irradiator

In the curing step, a particular area of a liquid film of an active energy ray curable liquid composition formed in the layer forming step is irradiated with active energy rays to cure the liquid film. The curing step can be conducted by the active energy ray irradiator.

The active energy rays have no particular limit. In addition to ultraviolet rays, for example, electron beams, $\alpha$ rays, $\beta$ rays, $\gamma$ rays, X rays that can apply energy required to proceed polymerization reaction of the polymerizable component in the composition are suitable. If a high energy light source is used, the polymerization reaction can proceed without a polymerization initiator. In addition, in the case of irradiation of ultraviolet rays, mercury-free is strongly demanded in terms of protection of environment. Therefore, replacement with GaN-based ultraviolet light-emitting devices is greatly preferred from industrial and environmental point of view. Furthermore, ultraviolet ray light-emitting diode (UV-LED) and ultraviolet ray laser diode (UV-LD) are preferable. Small size, long working life, high efficiency, and high cost performance make such irradiation sources desirable.

As the active energy ray irradiator, an ultraviolet (UV) irradiating lamps, electron beam irradiators, etc. can be used. In addition, it is preferable to include a mechanism to remove ozone.

The ultraviolet ray irradiating lamp includes, for example, a high pressure mercury lamp, an ultra high pressure mercury lamp, a metal halide lamp, and an ultraviolet ray light-emitting diode (UV-LED).

The ultra-high pressure mercury lamp is a point light source but if the DeepUV type combined with an optical system to improve the light use efficiency is used, the lamp is capable of emitting light in a short-wavelength range.

Since the metal halide lamp has a wide range of wavelength, it is suitable for colored materials. Halogenated materials of metal such as Pb, Sn, and Fe are used therefor and can be selected to suit to absorption spectrum of a photopolymerization initiator. The lamp for use in curing has no particular limit and can be suitably selected to suit to a particular application. For example, lamps available on the market such as H lamp, D lamp, or V lamp (manufactured by Fusion System) can be used.

There is no specific limitation to the emitting wavelength of the ultraviolet ray light-emitting diode and it can be suitably selected to suit to a particular application. In general, wavelengths of 365 nm, 375 nm, 385 nm, 395 nm, and 405 nm are used. Taking into account the impact on the color of a solid freeform fabrication object, irradiation of light having a short wavelength is advantageous to increase absorption of a polymerization initiator. Of these, considering using it for the solid freeform fabrication object of the present disclosure as a hydrogel easily affected by heat energy, it is preferable to use an ultraviolet ray light-emitting diode (UV-LED) producing less heat as an ultraviolet (UV) ray irradiating lamp.

The active energy ray curable liquid composition is cured to obtain cured matter. To obtain the cured matter, for example, it is preferable to irradiate the active energy ray curable liquid composition with an LED lamp in an amount of 1,500 mL/cm$^2$.

The method of manufacturing a solid freeform fabrication object and the device for manufacturing a solid freeform fabrication object are described below with reference to specific embodiments.

First, surface data or solid data of a three-dimensional form designed by three dimensional computer-aided design (CAD) or taken in by a three-dimensional scanner or a digitizer are converted into Standard Template Library (STL) format, which is thereafter input into a device for manufacturing a solid freeform fabrication object.

Based on the input data, the direction of fabrication of a three-dimensional form to be fabricated is determined. The direction of fabrication is not particularly limited. Normally, the direction is chosen such that the Z direction (height direction) is the lowest.

After determining the direction of fabrication, the projected areas on X-Y plane, X-Z plane, and Y-Z plane of the three-dimensional form are obtained. The thus-obtained block form is sliced in the Z direction with a thickness of a single layer. The thickness of a single layer changes depending on the material. For example, it is about 20 to about 60 $\mu$m. When only one three-dimensional object is manufactured, this block form is arranged to be placed on the center of the Z stage (i.e., table on which the object lifted down layer by layer for each layer forming is placed). In addition, when a plurality of three-dimensional objects are fabricated at the same time, the block forms are arranged on the Z stage. Alternatively, the block forms can be piled up. It is possible to automatically create these block forms, the slice data (contour line data), and the placement on the Z stage if materials to be used are determined.

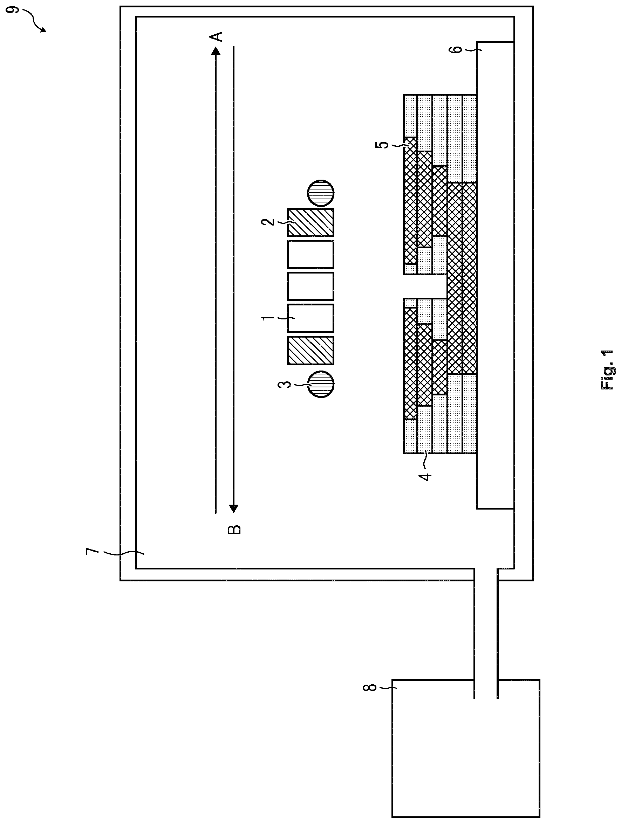

Next, fabrication step is conducted. The inkjet head 1 (FIG.1) as the liquid film forming device reciprocates both in the direction A and the direction B to form dots while discharging an active energy ray curable liquid composition. Moreover, such dots are continuously formed to form a liquid film at desired sites. The UV lamp adjacent to the inkjet head irradiates the formed liquid film with ultraviolet rays to cure it, thereby forming hydrogel film on desired sites.

After a single layer of the hydrogel film is formed, a stage 6 (FIG. 1) is lowered in an amount corresponding to the thickness of the single layer. Again, continuous dots are formed on the hydrogel film to form liquid film at desired sites. Thereafter, the liquid film is irradiated with ultraviolet (UV) rays and cured to form hydrogel film at desired sites. This lamination is repeated to fabricate a solid object.

In addition, to shorten the fabrication time, employing a method is preferable which includes jetting a liquid material for soft material molding while the integrated inkjet head is moving outward and a liquid material for hard material molding while the integrated inkjet head is moving inward for lamination.

Moreover, when the active energy ray irradiator is disposed next to the inkjet head to jet the active energy ray curable liquid composition, the fabrication speed increases.

In addition, to smooth the fabricated layer, smoothing treatment is conducted immediately after the curing treatment.

In the smoothing treatment, for example, the surface of the cured film is smoothed by using a smoothing member such as a roller and a blade. For this reason, the precision per layer is improved so that the entire of a solid freeform fabrication object can be precisely fabricated.

At this point, to shorten the lamination time and improve smoothness of the layer, the smoothing member is preferably disposed adjacent to the ultraviolet ray irradiator.

The system for manufacturing a solid freeform fabrication object includes an accommodating unit to accommodate the active energy ray curable liquid composition.

The drawing is a schematic diagram illustrating an example of a system 9 of a solid freeform fabrication object 5 according to an embodiment of the present invention.

The system 9 for manufacturing a solid freeform fabrication object discharges the active energy ray curable liquid composition onto the stage 6 using a head unit in which the inkjet heads 1 are disposed and cures the active energy ray curable liquid composition by a UV lamp 2 adjacent to the ink head 1. Depending on the form of a solid freeform fabrication object to be manufactured, it is possible to manufacture a supporting material 4 which is harder than the solid freeform fabrication object to be manufactured.

The active energy ray curable liquid composition is jetted by the inkjet head 1 and irradiated and cured with UV rays. Thereafter, the cured film is subject to smoothing treatment using a smoothing member (roller 3) to form a fabrication object layer. This step is repeated to manufacture a solid freeform fabrication object 5.

In addition, in the system 9 for manufacturing a solid freeform fabrication object of the solid freeform fabrication object 5 according to an embodiment of the present disclosure, a temperature and humidity controlling device 8 can control the temperature and the absolute humidity in the device 9 constant.

Moreover, to keep the temperature and the absolute humidity in the device 9 constant, the device 9 may employ a configuration in which a humidifier 7 covers the entire of the device 9.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

Preparation of Active Energy Ray Curable Liquid Composition 1

While stirring 20 parts of pure water, 0.8 parts of synthesized hectorite (laponite XLG, manufactured by Rock-Wood) having a composition of $[Mg_{5.34}Li_{0.66}Si_8O_{20}(OH)_4]Na^-_{0.66}$ as lamellar clay mineral was added little by little to the pure water and stirred to prepare a liquid dispersion.

Next, as the polymerizable monomer, 4 parts of N,N-dimethyl acrylamide (manufactured by Wako Pure Chemical Industries, Ltd.) from which the polymerization inhibitor was removed by passing it through an active alumina column, 0.01 parts of sodium dodecyl sulfate (manufactured by Wako Pure Chemical Industries, Ltd.) as surfactant, and 0.015 parts of 1-hydroxy cyclohexyl phenylketone (IRGACURE® 184, manufacture by BASF) as photopolymerization initiator were admixed with the thus obtained liquid dispersion.

Moreover, while cooling down the thus-obtained liquid mixture in an ice bath, 0.1 parts of tetramethylethylenen dimaine (manufactured by Wako Pure Chemical Industries, Ltd.) was admixed to prepare an active energy ray curable liquid composition 1.

Preparation of Active Energy Ray Curable Liquid Composition 2

While stirring 5 parts of pure water, 0.8 parts of synthesized hectorite (laponite XLG, manufactured by Rock-Wood) having a composition of $[Mg_{5.34}Li_{0.66}Si_8O_{20}(OH)_4]Na^-_{0.66}$ as lamellar clay mineral was added to the pure water followed by stirring to swell the synthesized hectorite. 15 parts of glycerin was further added as a water-soluble organic solvent and stirred to prepare a liquid dispersion.

Next, as the polymerizable monomer, 4 parts of N,N-dimethyl acrylamide (manufactured by Wako Pure Chemical Industries, Ltd.) from which the polymerization inhibitor was removed by passing it through an active alumina column, 0.01 parts of sodium dodecyl sulfate (manufactured by Wako Pure Chemical Industries, Ltd.) as surfactant, and 0.015 parts of 1-hydroxy cyclohexyl phenylketone (IRGACURE® 184, manufacture by BASF) as photopolymerization initiator were admixed with the thus obtained liquid dispersion.

Moreover, while cooling down the thus-obtained liquid mixture in an ice bath, 0.1 parts of tetramethylethylenen diamine (manufactured by Wako Pure Chemical Industries, Ltd.) was admixed to prepare an active energy ray curable liquid composition 2.

Example 1

Utilizing the fabrication system illustrated in the drawing, a tank communicating with the inkjet head 1 (GEN4, manufactured by Ricoh Industry Company, Ltd.) was filled with the active energy ray curable liquid composition 1 (active energy ray curable composition). Next, while the temperature inside the device was set at 25 degrees C and the absolute humidity therein was set at 13.8 g/m³, the active energy ray curable liquid composition 1 having a density of 1 g/cm³ was discharged to form a film of a pattern of a resolution of 300 dpi $\times$ 1,200 dpi, 20 mm $\times$ 30 mm, and a layer thickness of 0.02 mm on the stage 6 and irradiated with beams in an amount of 1,500 mJ/cm² using the LED lamp adjacent to the head so that the active energy ray curable liquid composition 1 was cured. The same process was repeated 100 times to manufacture a solid freeform fabrication object having 100 layers in total. Under the same condition, ten solid freeform fabrication objects were manufactured.

Example 2

A solid freeform fabrication object was manufactured in the same manner as in Example 1 except that the absolute humidity was changed to 18.4 g/m$^3$.

Example 3

A solid freeform fabrication object was manufactured in the same manner as in Example 1 except that the absolute humidity was changed to 9.2 g/m$^3$.

Example 4

A solid freeform fabrication object was manufactured in the same manner as in Example 1 except that the absolute humidity was changed to 6.9 g/m$^3$.

Example 5

A solid freeform fabrication object was manufactured in the same manner as in Example 1 except that the active energy ray curable liquid composition 1 was changed to the active energy ray curable liquid composition 2.

Comparative Example 1

A solid freeform fabrication object was manufactured in the same manner as in Example 1 except that the temperature and humidity were not controlled. The temperature and the absolute humidity in the system were respectively 40 degrees C and 5.1 g/m$^3$.

Comparative Example 2

A solid freeform fabrication object was manufactured in the same manner as in Example 1 except that the absolute humidity was changed to 20.7 g/m$^3$.

Next, using the thus-obtained solid freeform fabrication objects, fabrication accuracy (difference between theoretical mass value and measured mass value and difference between theoretical value and the measured value in the height direction) was evaluated in the following manner. The results are shown in Table 1.

Difference Between Theoretical Mass Value and Measured Mass Value

The mass of the ten solid freeform fabrication objects fabricated in each of Examples and Comparative Examples were measured using electronic scale (manufactured by Shimadzu Corporation). The average of the difference (percent) from the theoretical value (1.2 g) was calculated based on the following relation 1.

$$\text{(Difference (percent) Between Theoretical Mass Value and Measured Mass Vlaue)} =$$

$$\{(|\text{theoretical mass value of 1.2 g - measured mass value (g)}|/\text{theoretical mass value of 1.2 g})\}$$

$$\times 100 \text{ (percent)} \qquad \text{Relation 1}$$

If "the average of the difference between theoretical mass value and measured mass value" is 15 percent or less, no practical problem occurs.

Difference Between Theoretical Value and Measured Value in Height Direction

The mass of the ten solid freeform fabrication objects manufactured in each of Examples and Comparative Examples were measured using a digital caliper (manufactured by Mitutoyo Corporation). The average of the difference (percent) between the theoretical value (2 mm) and the measured value in the height direction was calculated based on the following relation 2.

$$\text{Difference Between Theoretical Value and Measured Value} = \{(|\text{theoretical value in height}$$

$$\text{direction of 2 mm - measured value (mm) in height direction}|/\text{theoretical value in height}$$

$$\text{direction of 2 mm}\} \times 100 \text{ (percent)} \qquad \text{Relation 2}$$

If "the average of the difference between theoretical value and measured value in height direction" is 15 percent or less, no practical problem occurs.

Table 1

| | | Environment in device | | Evaluation results | | | |
| --- | --- | --- | --- | --- | --- | --- | --- |
| | | | | Mass | | Height | |
| | | Absolute humidity (g/m$^3$) | Temperature (degrees C) | Measured value (degrees C) | Average on difference (percent) between theoretical value and measured value | Measured value (mm) | Average on difference (percent) between theoretical value and measured value |
| Example | 1 | 13.8 | 25 | 1.18 | 1.7 | 2.02 | 1 |
| | 2 | 18.4 | 25 | 1.32 | 10 | 2.18 | 9 |
| | 3 | 9.2 | 25 | 1.1 | 8 | 2.14 | 7 |
| | 4 | 6.9 | 25 | 1.06 | 12 | 1.74 | 13 |
| | 5 | 13.8 | 25 | 1.23 | 2.5 | 2.04 | 2 |
| Comparative Example | 1 | 5.1 | 40 | 0.76 | 37 | 2.84 | 42 |
| | 2 | 20.7 | 25 | 1.56 | 30 | 2.6 | 29 |

As shown in Table 1, the measured values of the mass of the solid freeform fabrication objects of from Examples 1 to 4 have averages of the differences between the theoretical values and the measured values of from as small as 1.7 to 12 percent. Namely, the objects are found to be close to the theoretical values of the mass. Moreover, the measured values of the height of the solid freeform fabrication objects of from Examples 1 to 4 have averages of the differences between the theoretical values and the measured values of from as small as 1 to 13 percent. Namely, the objects are found to be close to the theoretical values of the height.

In addition, as seen in the results of Example 5, in the case in which the active energy ray curable liquid composition contains a water-soluble organic solvent, the same results as with Examples 1 to 4 can be obtained.

In Comparative Example 1 in which the temperature and the humidity of the manufacturing environment of the solid freeform fabrication object were not controlled, the mass significantly decreased as the moisture evaporated during the fabrication so that the difference of the mass between the theoretical value and the measured value was 37 percent and the difference of the theoretical value and the measured value in the height direction was 42 percent. Moreover, in Comparative Example 2 of high humidity environment, the solid freeform fabrication object absorbed moisture due to the impact of the excessive moisture in the environment so that the difference of the mass between the theoretical value and the measured value was 30 percent and the difference of the theoretical value and the measured value in the height direction was 29 percent.

As seen in the results of Examples and Comparative Examples, when the absolute humidity is high in the environment in a system, the solid freeform fabrication object absorbs moisture in the environment so that the mass of the solid freeform fabrication objects increases and the object swells. Therefore, the film thickness in the height direction tends to increase. Conversely, when the absolute humidity is low in the environment in a system, the moisture in the solid freeform fabrication object evaporates so that the mass of the solid freeform fabrication object decreases and the object shrinks. Therefore, the film thickness in the height direction tends to decrease.

As seen in the results, solid freeform fabrication objects having excellent fabrication accuracy can be obtained when the absolute moisture is set to be within a range of from 5.5 to 20 g/m$^3$.

**Claims**

**1.** A method of manufacturing a solid freeform fabrication object (5), comprising:

curing a liquid film made of an active energy ray curable liquid composition to form a layer; and
laminating the layer to obtain the solid freeform fabrication object (5),

**characterized by** controlling an absolute humidity in an environment where the solid freeform fabrication object is manufactured, wherein the absolute humidity is controlled to be from 5.5 to 20 g/m$^3$.

2. The method according to claim 1, wherein the method satisfies at least one of the following (1) and (2):

   (1): the active energy ray curable liquid composition includes water or a water-soluble organic solvent and
   (2): cured matter obtained by curing the active energy ray curable liquid composition is hygroscopic.

3. The method according to claim 1 or 2, wherein the absolute humidity is from 6.5 to 18.5 g/m$^3$.

4. The method according to any one of claims 1 to 3, wherein the solid freeform fabrication object includes a hydrogel including water and a polymer.

5. The method according to claim 4, wherein the hydrogel further includes a mineral and wherein the hydrogel includes the water enclosed in a three-dimensional network structure formed of a complex of the polymer and the mineral.

6. The method according to claim 4 or 5, wherein the water accounts for 10 percent by mass or more of a total content of the hydrogel.

7. A system (9) for manufacturing a solid freeform fabrication object (5), comprising:

   an accommodating unit to accommodate an active energy ray curable liquid composition;
   a liquid film forming device (1) to form a liquid film made of the active energy ray curable liquid composition;
   an active energy ray irradiator (2) configured to cure the liquid film;
   wherein the liquid film forming device (1) and the active energy ray irradiator (2) are configured to laminate the liquid film cured by the active energy ray irradiator to form the solid freeform fabrication object (5); and
   **characterized in that** the system comprises a device (8) to control an absolute humidity in an environment where the solid freeform fabrication object (5) is manufactured, wherein the control device (8) is operative to keep the environment at an absolute humidity of from 5.5 to 20 g/m3.

8. The system for manufacturing according to claim 7, wherein the system satisfies at least one of the following (1) and (2):

   (1): the active energy ray curable liquid composition includes water or a water-soluble organic solvent and
   (2): cured matter obtained by curing the active energy ray curable liquid composition is hygroscopic.

**Patentansprüche**

1. Verfahren zum Herstellen eines festen Freiform-Herstellungsobjekts (5), Folgendes umfassend:

   Aushärten eines Flüssigkeitsfilms bestehend aus einer durch Aktivenergiestrahlen härtbaren flüssigen Zusammensetzung, um eine Schicht auszubilden; und
   Laminieren der Schicht, um das feste Freiform-Herstellungsobjekt (5) zu erlangen,
   **gekennzeichnet durch** Steuern einer absoluten Feuchtigkeit in einer Umgebung, worin das feste Freiform-Herstellungsobjekt hergestellt wird, wobei die absolute Feuchtigkeit so gesteuert wird, dass sie zwischen 5,5 und 20 g/m$^3$ liegt.

2. Verfahren nach Anspruch 1, worin das Verfahren mindestens einen der folgenden Punkte (1) und (2) erfüllt:

   (1): die durch Aktivenergiestrahlen härtbare flüssige Zusammensetzung schließt Wasser oder ein wasserlösliches organisches Lösungsmittel ein, und
   (2): ein durch Härten der durch Aktivenergiestrahlen härtbaren flüssigen Zusammensetzung erlangtes gehärtetes Material ist hygroskopisch.

3. Verfahren nach Anspruch 1 oder 2, wobei die absolute Feuchtigkeit zwischen 6,5 und 18,5 g/m$^3$ liegt.

4. Verfahren nach einem der Ansprüche 1 bis 3, wobei das feste Freiform-Herstellungsobjekt ein Hydrogel einschließt, das Wasser und ein Polymer einschließt.

**5.** Verfahren nach Anspruch 4, wobei das Hydrogel ferner ein Mineral einschließt und wobei das Hydrogel das Wasser einschließt, das von einer dreidimensionalen Netzwerkstruktur umgeben ist, die aus einem Komplex aus dem Polymer und dem Mineral gebildet ist.

**6.** Verfahren nach Anspruch 4 oder 5, wobei das Wasser 10 Masseprozent oder mehr eines Gesamtgehalts des Hydrogels ausmacht.

**7.** System (9) zum Herstellen eines festen Freiform-Herstellungsobjekts (5), Folgendes umfassend:

eine Aufnahmeeinheit, um eine durch Aktivenergiestrahlen härtbare flüssige Zusammensetzung aufzunehmen;
eine Flüssigkeitsfilmbildungsvorrichtung (1), um einen Flüssigkeitsfilm auszubilden, der aus der durch Aktivenergiestrahlen härtbaren flüssigen Zusammensetzung besteht;
eine Aktivenergiestrahlen-Bestrahlungsvorrichtung (2), die dafür konfiguriert ist, den Flüssigkeitsfilm zu härten;
wobei die Flüssigkeitsfilmbildungsvorrichtung (1) und die Aktivenergiestrahlen-Bestrahlungsvorrichtung (2) dafür konfiguriert sind, den durch die Aktivenergiestrahlen-Bestrahlungsvorrichtung gehärteten Flüssigkeitsfilm zu laminieren, um das feste Freiform-Herstellungsobjekt (5) auszubilden; und
**dadurch gekennzeichnet, dass** das System eine Vorrichtung (8) umfasst, um eine absolute Feuchtigkeit in einer Umgebung zu steuern, worin das feste Freiform-Herstellungsobjekt (5) hergestellt wird, wobei die Steuerungsvorrichtung (8) dafür betriebsfähig ist, die Umgebung auf einer absoluten Feuchtigkeit von 5,5 bis 20 g/m$^3$ zu halten.

**8.** System zur Herstellung nach Anspruch 7, wobei das System mindestens einen der folgenden Punkte (1) und (2) erfüllt:

(1): die durch Aktivenergiestrahlen härtbare flüssige Zusammensetzung schließt Wasser oder ein wasserlösliches organisches Lösungsmittel ein, und
(2): ein durch Härten der durch Aktivenergiestrahlen härtbaren flüssigen Zusammensetzung erlangtes gehärtetes Material ist hygroskopisch.


**Revendications**

**1.** Procédé de fabrication d'un objet de fabrication de forme libre solide (5), comprenant:

le durcissement d'un film liquide constitué d'une composition liquide durcissable par un rayonnement d'énergie active pour former une couche ; et
la stratification de la couche pour obtenir l'objet de fabrication de forme libre solide (5),
**caractérisé par** le contrôle d'une humidité absolue dans un environnement où l'objet de fabrication de forme libre solide est fabriqué, dans lequel l'humidité absolue est contrôlée de sorte à être comprise entre 5,5 et 20 g/m$^3$.

**2.** Procédé selon la revendication 1, dans lequel le procédé satisfait au moins l'un des éléments suivants (1) et (2) :

(1) : la composition liquide durcissable par un rayonnement d'énergie active inclut de l'eau ou un solvant organique soluble dans l'eau, et
(2) : une matière durcie obtenue en durcissant la composition liquide durcissable par un rayonnement d'énergie active est hygroscopique.

**3.** Procédé selon les revendications 1 ou 2, dans lequel l'humidité absolue est comprise entre 6,5 et 18,5 g/m$^3$.

**4.** Procédé selon l'une quelconque des revendications 1 à 3, dans lequel l'objet de fabrication de forme libre solide inclut un hydrogel incluant de l'eau et un polymère.

**5.** Procédé selon la revendication 4, dans lequel l'hydrogel inclut en outre un minéral et dans lequel l'hydrogel inclut l'eau renfermée dans une structure de réseau tridimensionnelle formée d'un complexe du polymère et du minéral.

**6.** Procédé selon les revendications 4 ou 5, dans lequel l'eau représente 10 pour cent en masse ou plus d'une teneur totale de l'hydrogel.

7. Système (9) de fabrication d'un objet de fabrication de forme libre solide (5), comprenant :

une unité de réception pour recevoir une composition liquide durcissable par un rayonnement d'énergie active ;
un dispositif de formation d'un film liquide (1) pour former un film liquide constitué de la composition liquide durcissable par un rayonnement d'énergie active ;
un irradiateur du rayonnement d'énergie active (2) configuré pour durcir le film liquide ;
dans lequel le dispositif de formation du film liquide (1) et l'irradiateur du rayonnement d'énergie (2) active sont configurés pour stratifier le film liquide durci par l'irradiateur du rayonnement d'énergie active pour former l'objet de fabrication de forme libre solide (5) ; et
**caractérisé en ce que** le système comprend un dispositif (8) pour contrôler une humidité absolue dans un environnement où l'objet de fabrication de forme libre solide (5) est fabriqué, dans lequel le dispositif de contrôle (8) est opérationnel pour maintenir l'environnement à une humidité absolue compris entre 5,5 et 20 g/m$^3$.

8. Système de fabrication selon la revendication 7, dans lequel le système satisfait au moins l'un des éléments suivants (1) et (2) :

(1) : la composition liquide durcissable par un rayonnement d'énergie active inclut de l'eau ou un solvant organique soluble dans l'eau, et
(2) : une matière durcie obtenue en durcissant la composition liquide durcissable par un rayonnement d'énergie active est hygroscopique.

Fig. 1

**EP 3 339 001 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015111366 A1
- WO 2016019078 A1